# EUROPÄISCHE PATENTANMELDUNG

(11) **EP 2 080 955 A2**
(43) Veröffentlichungstag der Anmeldung: **22.07.2009**
(21) Anmeldenummer: 09000384.9
(22) Anmeldetag: 14.01.2009
(51) Int. Cl.: F24D 3/14, F24D 3/16

(54) **Verfahren zum nachträglichen Einbau eines aussenliegenden Wandspeicher-Heizungssystem**

(30) Priorität: 15.01.2008 AT 582008
(71) Anmelder: Werenka, Christian, 4052 Ansfelden (AT); Kaltenberger, Erwin, 4052 Ansfelden (AT)
(72) Erfinder: Werenka, Christian, 4052 Ansfelden (AT); Kaltenberger, Erwin, 4052 Ansfelden (AT)
(74) Vertreter: Landgraf, Elvira

(57) **Zusammenfassung**

Verfahren zum nachträglichen Einbau eines Heizungssystems, insbesondere Wandheizungssystems, **dadurch gekennzeichnet, dass** die Rohre mit dem Heizmedium von außen in der Außenmauer montiert werden und die Wand nach außen isoliert ist ohne dass im Wohnbereich Installationsarbeiten notwendig sind.

## Beschreibung

Die Erfindung betrifft ein an Gebäudeaußenwänden situiertes Wandspeicher-Heizungssystem, das im Zuge von Sanierungsmaßnahmen installiert wird.

Die immer stärker steigenden Energiepreise und die im Kyoto-Protokoll vereinbarte CO₂- Emissionsreduktion erfordern den Einsatz von alternativen Heizkonzepten.

Einen wesentlichen Beitrag kann hierbei die Solarenergie liefern.

Um mit Sonnenenergie ein Gebäude teilweise oder vollständig zu beheizen, muss ein Niedertemperaturabgabesystem wie das hier beschriebene installiert werden.

Heute werden Gebäude selbstverständlich mit Fußbodenheizungen ausgestattet. Noch vor einigen Jahren war dies nicht der Fall. Da Energie billig war, spielten solche Überlegungen kaum eine Rolle.

Mit steigenden Energiepreisen stellt sich für viele Hausbesitzer die Frage welches Heizungssystem wirtschaftlich sinnvoll und welcher Aufwand noch vertretbar ist.

Die dem Stand der Technik entsprechende Methode die Rohre an der Innenseite zu verlegen bedeutet, dass in fertigen Wohnungen die Wände aufgestemmt werden müssen, oder wie in EP 1327828 B1 beschrieben durch das Anbringen von Platten oder vorgefertigten Modulen der Innenraum zur Baustelle wird. Kaum ein Mieter oder Hausbesitzer nimmt eine derartige Beeinträchtigung der Wohnqualität für die Installation einer Wand- oder Fußbodenheizung in Kauf. Gerade bei Wohnbauten ist dies ein wesentlicher Nachteilteil.

Genauso wie die nachträgliche Installation einer Fußbodenheizung kaum den Aufwand rechtfertigen wird.

Somit ist eine Verlegung an der Außenseite die geringste Beeinträchtigung für die Bewohner und ist im Rahmen einer Wärmedämmung die sinnvollste Variante einer Niedertemperaturheizung.

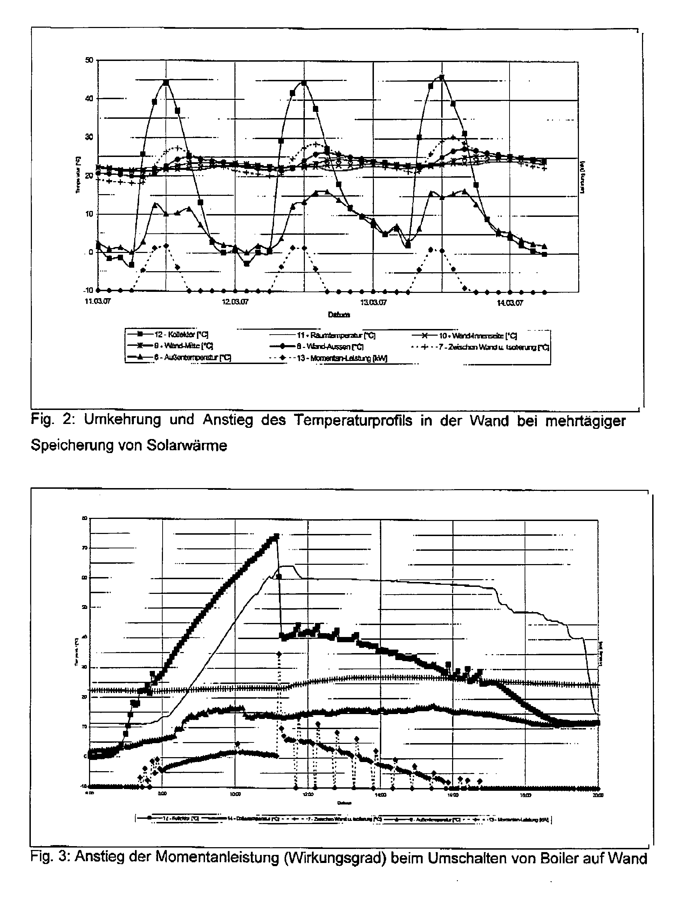

Weitere Vorteile der Wärmeeinbringung in die Außenwand werden sowohl von DE2649273 und DE10025642A1 als auch DE19501112A1 aufgezeigt, wie der Wegfall eines Pufferspeichers und die Nutzung von niedrigen Vorlauftemperaturen, die den Wirkungsgrad von Solarkollektoren deutlich steigern Fig. 3.

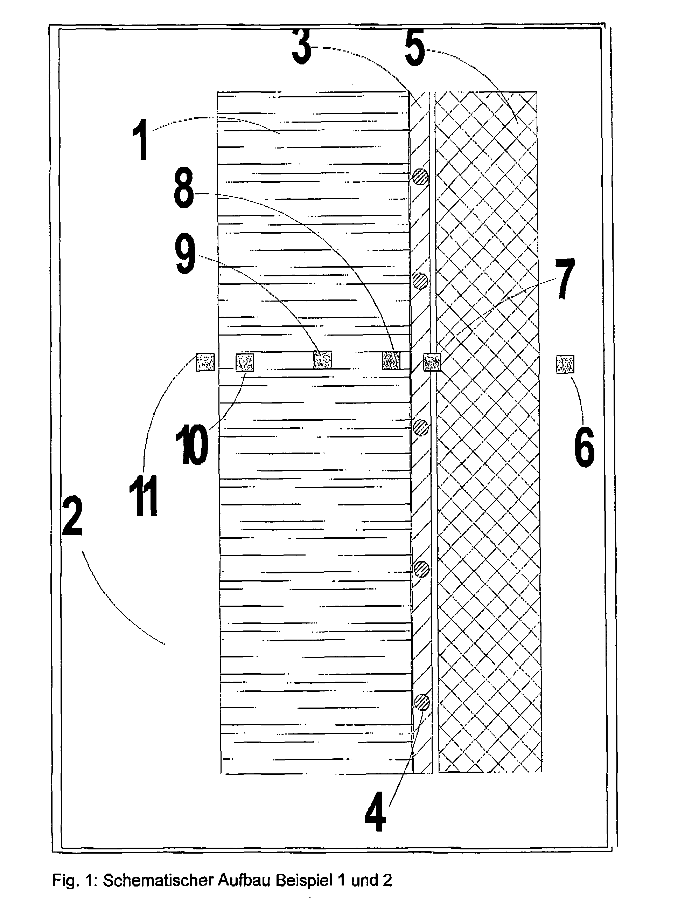

Das vorliegende Konzept einer Wandspeicherheizung beruht auf der Kombination von bekannten Elementen. Es unterscheidet sich im Wesentlichen vom Stand der Technik durch die Position der Wärmeeinbringung in die Wand Fig. 1 und die einfache Umsetzung mit Komponenten, die am Bau verwendet werden und sich bewährt haben. Erst die Verfügbarkeit von Isolierplatten von über 15 cm Stärke und neue Entwicklungen wie Klebeanker, beschrieben in AT411077B, ermöglichen erst eine einfache, die Verrohrung nicht gefährdende Montage von Dämmplatten.

Gegenstand der Erfindung ist daher ein Heizungssystem, insbesondere ein Wandheizungssystem, das dadurch gekennzeichnet ist, dass die Rohre mit dem Heizmedium sich in der äußeren Hälfte der Außenmauer oder Decke befinden und die einfache Umsetzung mit Komponenten, die am Bau verwendet werden und sich bewährt haben.

Wir haben bei der Umsetzung unserer Erfindung bewusst keine Spezialverrohung wie die in DE10025642A1 beschrieben Kapillarrohrmatten oder speziell vorgeformte Isolierplatten verwendet, sondern Rohre wie sie für Fußbodenheizungen verwendet werden.

Einfache Rohre können problemlos der gesamten Gebäudehülle angepasst werden. Die Isolierung kann mit handelsüblichen Platten oder Matten erfolgen.

Die Art der Isolierung (Styropor oder Mineralwolle) spielt keine Rolle.

Es ist nur zu beachten, dass die Stärke mind. 10 cm Styropor entspricht und beim Befestigen der Isolierung keine Rohre angebohrt werden!

Deshalb eignen sich für Dämmplatten am besten Klebeanker, die vor dem Verkleben der Isolierung in der Wand befestigt werden.

Für die Lattung bei Mineralwolle-Etemit gilt im Prinzip dasselbe.

Ein wichtiges Argument gegen herkömmliche Wandheizung ist auch, dass das nachträgliche Bohren von Löchern oder das Einschlagen eines Nagels problematisch ist.

Bei der Erfindung besteht diesbezüglich keine Gefahr die Leitungen zu beschädigen.

Um eine gute Wärmeübertragung und Speicherung in der Wand zu gewährleisten, müssen die Rohre in den Außenputz verlegt werden.

Dies wird durch das Fräsen oder Schneiden eines Schlitzkanals in den die Rohre verlegt werden oder durch das Anordnen der Rohre zwischen einer Holzlattlung erreicht.

Der Kanal oder der Raum zwischen den Latten wird anschließend mit Mörtel verputzt. Für die Befestigung der Klebeanker ist zwischen den Schlitzkanälen gefahrlos ausreichend Platz. Die Montage der Dämmplatten kann ohne aufwendiges Rohre suchen erfolgen.

Bei Verwendung einer Lattung ist diese nach dem Verputzen gut sichtbar und der Aufbau der Isolierung kann ohne Probleme durchgeführt werden.

Ein sinnvolles Heizen mit Sonnenenergie ist nur mit einem Niedertemperaturabgabesystem möglich.

Unsere Idee erschließt diese Möglichkeit Eigenheimbesitzern oder auch Wohnbauten, die bisher nur die Warmwasserbereitung durch Sonnenkollektoren als wirtschaftlich sinnvoll betrachtet haben und die der Aufwand einer "Indoor-Verrohrung" abgeschreckt hat.

Wir sind davon überzeugt, dass dieses Konzept einen erheblichen Beitrag zur Senkung des CO₂ Ausstoßes leisten kann.

Der schematische Aufbau des erfindungsgemäßen Systems ist in Fig. 1 dargestellt:

Darin bedeuten (1) die Wand, (2) die Innenseite der Wand, (3) den Außenputz, (4) die Heizungsrohre und (5) die Außenisolierung.

Die Fig. 2 u.3 zeigen die Temperaturverteilung in der Wand, wobei die Position der darin abgebildeten Temperaturmessstellen in Fig. 1 entsprechend der Außentemperatur (6), zwischen Isolierung und Wand (7), Wand-Außenseite (8), Wand-Mitte (9), Wand-Innenseite (10) und Raumtemperatur (11) gezeigt werden.

### Beispiel 1:

Im Zuge einer Altbausanierung wurden die Rohre in den Außenputz verlegt.
Bild.1 zeigt den schematischen Aufbau der Wand mit ca.: 3 cm Innenputz, 28cm Hohlkammer-Ziegel, ca. 3cm Außenputz und die Position der Heizungsrohre und Temperaturmesspunkte.
Mit Hilfe eines Hilti-Mauerschlitzgerätes (Doppelflex) wurden im Abstand von 20 cm ein 3 cm breiter und 2-4 cm tiefer Schlitz in den Außenputz gefräst.
In diesen Schlitz wurden im Abstand von ca. 1 m Halteklammern für das Heizrohr verschraubt.
Das Heizrohr, ein PE-Rohr, aluummantelt, mit einem Durchmesser von 16 mm, wie es für Fußbodenheizungen verwendet wird, wurde anschließend im Schlitz verlegt.
Um einen guten Wärmeübergang vom Rohr in die Mauer zu gewährleisten, wurden Schlitz und Rohre mit einem Quarzsand-Zement-Mörtel verputzt. Zur Verbesserung der mechanischen Festigkeit wurde zusätzlich mit Netz und Kleber versiegelt.
Bei der Rohrführung wurde darauf geachtet, dass der Druckabfall in den einzelnen Heizkreisen in der selben Größenordnung liegt.
Dadurch wird eine gleichmäßige Wärmeverteilung erreicht.
Die einzelnen Heizkreise wurden am Dachboden über Ventile an einen ringförmig verlegten Vor- und Rücklauf angeschlossen. Alle nicht in der Mauer verlegten Rohre wurden entsprechend isoliert.
Die Verbindung zum Kollektor (21 m²) erfolgt über ein 3-Wegventil und Pumpe.
Die solare Wärme kann je nach Bedarf in die Wandheizungsrohre geleitet oder für die Warmwasserbereitung in einen 500 Liter Boiler verwendet werden.
Der Vollwärmeschutz, 16 cm Styropor wurden unter Verwendung von Klebeankern verlegt.
Somit ist ein nachträgliches Dübeln des Vollwärmeschutzes nicht nötig.
Das Risiko dabei ein Heizungsrohr anzubohren entfällt.

### Beispiel 2:

An der Wetterseite des Hauses wurde die alte Eternitvertäfelung entfernt und eine neue verstärkte Grundlattung direkt auf der Mauer (Ziegel) angebracht. Die Heizungsrohre wurden mit denselben Halterungen wie in Beispiel 1 ohne in die Mauer einen Schlitz zu fräsen zwischen den Latten (3 cm dick) wieder im Abstand von 20 cm verlegt.
Die Verbindung der Rohre mit der Mauer wurden dann anschließend durch Auffüllen des Raums zwischen der Lattung mit Putz gewährleistet.
Die Isolierung wurde mit 18 cm Dämmwolle und Vertäfelung abgeschlossen.
Die dafür benötigte Querlattung wurde auf den verputzten Grundlatten montiert.

## Patentansprüche

1. Verfahren zum nachträglichen Einbau eines Wandheizungssystem, insbesondere Wandheizungssystem zur Erwärmung oder Abkühlung der Innenraumtemperatur, das mit Sonnenenergie, Wärmepumpe oder Abwärme betrieben wird, wobei das Wandheizungssystem aus Rohren besteht, **dadurch gekennzeichnet, dass** die Rohre für das Heizmedium auf der Außenseite der Außenmauer mit Klammern befestigt werden und anschließend mit Mörtel oder Kleber zu geputzt werden.

2. Verfahren nach Anspruch 1, **dadurch gekennzeichnet, dass** sämtliche für die Montage und Befestigung der Isolierung und Rohre notwendigen Bohr- und Dübelarbeiten vor der Verlegung der Rohre durchgeführt werden.

3. Verfahren nach einem der Ansprüche 1 oder 2, **dadurch gekennzeichnet, dass** die Rohre in Vertiefungen im bestehenden Außenputz verlegt werden, wobei die Vertiefungen durch Fräsen, Schneiden oder Stemmen von Schlitzkanälen gefertigt und mit gut wärmeleitfähigem Mörtel verputzt werden.

4. Verfahren nach einem der Ansprüche 1 oder 2, das **dadurch gekennzeichnet ist, dass** für die Montage von Wärmedämmmatten und Vertäfelung eine Holzlattung verwendet wird und die Rohre im Raum zwischen den Holzlatten mit Klammern montiert werden, worauf der Raum zwischen den Latten mit Mörtel aufgefüllt wird und die Holzlatten so montiert werden, dass nach dem Abziehen des überschüssigen Mörtels die Rohre vollständig von Mörtel bedeckt aber die Latten noch gut sichtbar sind.

5. Verfahren nach einem der Ansprüche 1 bis 3, **dadurch gekennzeichnet, dass** zur Montage der Wärmedämmplatten Klebeanker verwendet werden.

6. Verfahren nach einem der Ansprüche 1, 2 oder 4, **dadurch gekennzeichnet, dass** die Querlattung und der restliche Aufbau für die Montage von Wärmedämmmatten und Vertäfelung ausschließlich auf den im Außenputz gut sichtbaren verputzten Latten erfolgen.

7. Verfahren nach einem der Ansprüche 1 bis 6, **dadurch gekennzeichnet, dass** handelsübliche Baustoffe und Materialien verwendet werden.

8. Verfahren nach einem der Ansprüche 1 bis 7, **dadurch gekennzeichnet, dass** die Rohre derart montiert sind, dass sie direkt mit dem Kollektorkreislauf verbunden sind.
